# EUROPÄISCHE PATENTSCHRIFT

(11) **EP 4 244 957 B1**
(45) Veröffentlichungstag und Bekanntmachung des Hinweises auf die Patenterteilung: **22.07.2026**
(21) Anmeldenummer: 22713264.4
(22) Anmeldetag: 19.01.2022
(51) Int. Cl.: H02K 15/066, H02K 15/22

(54) **VERFAHREN ZUM EINBRINGEN UND FORMEN VON SPULEN IN EINEN STATOR EINER ELEKTRISCHEN ROTIERENDEN MASCHINE**
METHOD FOR INTRODUCING COILS INTO A STATOR OF AN ELECTRIC ROTATING MACHINE AND SHAPING THE COILS IN THE STATOR
PROCÉDÉ D'INTRODUCTION DE BOBINES DANS UN STATOR D'UNE MACHINE ÉLECTRIQUE TOURNANTE ET DE MISE EN FORME DES BOBINES DANS LE STATOR

(30) Priorität: 29.01.2021 DE 102021200843
(43) Veröffentlichungstag der Anmeldung: 20.09.2023
(73) Patentinhaber: Siemens Mobility GmbH, 80997 München (DE)
(72) Erfinder: LUTZ, Willi, 91639 Wolframs-Eschenbach (DE); SAFA, Bülent, 91207 Lauf (DE); WAFFLER, Harald, 90537 Feucht (DE); WENDT, Jan, 90489 Nürnberg (DE)
(74) Vertreter: Siemens Patent Attorneys
(86) Internationale Anmeldenummer: PCT/EP2022/051131
(87) Internationale Veröffentlichungsnummer: WO 2022/161828

(56) Entgegenhaltungen:
- DE-A1- 102018 104 838
- JP-A- 2009 195 007
- US-A1- 2005 005 422
- US-A1- 2007 143 983
- US-A1- 2014 201 979
- US-A1- 2019 393 748
- US-B2- 8 471 428

## Beschreibung

Die Erfindung betrifft ein Werkzeug zum Einbringen und Formen von Spulen in einen Stator einer elektrischen rotierenden Maschine sowie eine Verwendung eines derartigen Werkzeugs.

Elektrische rotierende Maschinen mit einer Nennleistung von mehreren hundert bis über eintausend Kilowatt werden insbesondere als Antriebs- bzw. Traktionsmotoren in Schienenfahrzeugen wie Triebzügen für den Regional- und Fernverkehr sowie Lokomotiven eingesetzt. Solche Maschinen bestehen üblicherweise aus einem Stator mit einem ringförmigen Statorkern und einem in dessen Statorinnenraum angeordneten Rotor. Der Stator ist üblicherweise als ein Blechpaket mit einer Mehrzahl durch Statorzähne gebildete offener Statornuten aufgebaut. In den Statornuten sind Spulen einer oder mehrerer Wicklungen angeordnet. Bei Synchron- und Asynchron-Drehstrommaschinen speist üblicherweise ein Stromrichter drei Phasen einer Wicklung.

Eine Spule besteht aus einer oder mehreren Windungen, wobei jede Windung wiederum aus einem oder mehreren parallel geschalteten Drähten, insbesondere Flachdrähten, besteht. Jede Windung weist zwei Windungsseiten entsprechend einem Hin- und einem Rückleiter auf, welche in zwei unterschiedlichen Statornuten liegen. Sofern eine Spule mehrere Windungen umfasst, sind diese innerhalb der Spule seriell geschaltet. Entsprechend der Windung bzw. den mehreren Windungen weist auch die Spule zwei Spulenseiten auf, welche in zwei unterschiedlichen Statornuten und einen bestimmten Nutsprung, d.h. eine Anzahl Statornuten in Umfangrichtung des Statorkerns, voneinander entfernt liegen. Vorzugsweise sind Spulenseiten von zwei Spulen in einer jeweilige Statornut übereinander angeordnet. Der außerhalb der Statornut bzw. des Statorkerns liegende Teil der Spule, welcher die beiden Spulenseiten miteinander verbindet, wird als Spulenkopf bezeichnet. Weiterhin weist die Spule einen Spulenanschluss im Bereich eines Spulenkopfes auf. Die verteilte Anordnung der Spulenseiten in unterschiedlichen Statornuten, auch als verteilte Wicklung bezeichnet, führt dazu, dass sich Spulenköpfe mehrerer Spulen überlappen. Eine verteilte Wicklung eignet sich grundsätzlich sowohl für Synchron- als auch für Asynchron-Drehstrommaschinen.

Insbesondere bei elektrischen Maschinen der genannten Leistungsklassen mit einer verteilten Wicklung kommen so genannte Formspulen zum Einsatz. Eine Formspule besteht beispielsweise aus einer gestapelten Mehrzahl Windungen, welche üblicherweise jeweils aus einem Flachdraht aus beispielsweise Kupfer bestehen und welche jeweils eine elektrische Isolierung in Form einer Folie oder eines Schutzlacks aufweisen. Üblicherweise erfolgt das Formen einer Formspule in mehreren Schritten, wobei in einem ersten Formungsschritt aus den Windungen zunächst eine zweidimensionale plane Spule geformt wird, bei welcher die Spulenseiten und Spulenköpfe in einer Ebene angeordnet sind, und in einem nachfolgenden zweiten Formungsschritt die Spule in eine dreidimensionale räumliche Spule umgeformt wird, bei welcher die Spulenseiten entsprechend dem gewünschten Nutsprung voneinander beabstandet sind. Für eine elektrische Isolierung der Spule ist diese beispielsweise mit einer oder mehreren Lagen eines Glimmerbands umwickelt, welches eine Erhöhung der Nässeresistenz sowie der Wärmeklasse der Spule bewirkt, sowie mit einer oder mehreren Lagen eines Gewebebands umwickelt, welches ergänzend einen mechanischen Schutz der Spule verwirklicht. Die Umwicklung erfolgt dabei beispielsweise vor dem ersten oder vor dem zweiten Formungsschritt, gegebenenfalls jedoch insbesondere im Bereich der Spulenköpfe erst nach dem zweiten Formungsschritt. Die geformten und umwickelten Spulen werden anschließend in die Statornuten eingebracht bzw. eingelegt, wobei dies üblicherweise manuell durch eine Montagefachkraft erfolgt.

US 8 471 428 B2 offenbart ein Werkzeug zum Einbringen und Formen von Spulen in einen Stator einer elektrischen Maschine.

Aus US 2019/393748 A1 ist ein Verfahren zum Herstellen eines Stators mit einem ringförmigen Statorkern bekannt. Der Statorkern weist eine Mehrzahl von Schlitzen, die jeweils eine sich in einer radialen Richtung öffnende Spuleneinfügeöffnung und in Umfangsseitenwänden ausgebildete und sich in einer axialen Richtung erstreckende Aussparungen aufweist. Eine Spule des Statorkerns weist in der Mehrzahl von Schlitzen untergebrachte die Schlitzunterbringungsabschnitte auf. Ein Keil des Statorkerns ist in den Aussparungen platziert. Die Schlitzunterbringungsabschnitte der Spule werden in die Mehrzahl von Schlitzen durch die Spuleneinfügeöffnungen in der radialen Richtung des Statorkerns eingefügt. Danach wird der Keil, der ein thermoplastisches Harz enthält, von einer Seite in der radialen Richtung des Statorkerns in Richtung auf die andere Seite in der radialen Richtung durch die Spuleneinfügeöffnung bewegt, während der Keil thermisch verformt wird, so dass dadurch der Keil mit den Aussparungen in Eingriff gebracht wird, so dass der Keil zumindest einen Teil der Spuleneinfügeöffnung in der radialen Richtung des Statorkerns betrachtet verschließt.

Die US 2014/201979 A1 betrifft eine Herstellungsvorrichtung für einen Stator einer rotierenden elektrischen Maschine. Dabei umfasst der Stator einen ringförmigen Statorkern, der eine Vielzahl von Schlitzen aufweist, und eine an dem Statorkern angebrachte Spule. Jeder der Schlitze umfasst eine Öffnung, die sich in einem inneren Umfang des Statorkerns öffnet, und einen unteren Abschnitt, wobei die Schlitze in einem Schlitzabstand von einem benachbarten von den Schlitzen angeordnet sind. Der Schlitzabstand erhöht sich von der Öffnung in Richtung des unteren Abschnitts. Die Spule umfasst eine Vielzahl von geraden Abschnitten, die jeweils in die Schlitze eingeführt sind, sowie eine Vielzahl von Spulenenden, die fortlaufend mit den geraden Abschnitten sind. Die Herstellungsvorrichtung weist eine Bauvorrichtung mit einer Vielzahl von Haltenuten auf, in denen die geraden Abschnitte der Spule einführbar sind. Dabei umfasst jede der Haltenuten einen unteren Abschnitt und eine Öffnung wobei benachbarte Haltenuten in einem Abstand angeordnet sind, der der gleiche ist wie von den Öffnungen der benachbarten Schlitze in dem Statorkern. Die Bauvorrichtung ist an einer inneren Seite des Statorkerns anordbar, wenn die Haltenuten jeweils den Öffnungen der Schlitze zugewandt sind. Eine Stützeinheit, stützt den Statorkern und die an der inneren Seite des Statorkerns angeordnete Bauvorrichtung in einem konzentrischen Zustand. Eine Vielzahl von Verbindungsmechanismen, die in der Bauvorrichtung vorgesehen sind, weisen jeweils ein Drückelement und eine Verbindung auf, wobei das Drückelement näher an dem unteren Abschnitt jeder Haltenut anordbar ist als der in der Haltenut eingeführte gerade Abschnitt. Die Verbindung ist an einer äußeren Seite einer Endfläche des Statorkerns in einer axialen Richtung und an einer inneren Seite in einer radialen Richtung des Statorkerns von dem Drückelement angeordnet. Die Verbindung bewegt das entsprechende Drückelement in eine Richtung von dem unteren Abschnitt der Haltenut in Richtung des entsprechenden Schlitzes und von dem Schlitz in Richtung des unteren Abschnitts. Eine Vielzahl von Drückeinheiten bringt gleichzeitig eine Drückkraft von der axialen Richtung des Statorkerns auf allen von den Spulenenden der Spule synchron mit dem Verbindungsmechanismus auf, wenn die geraden Abschnitte jeweils in die Haltenuten der mittels der Stützeinheit gestützten Bauvorrichtung eingeführt werden und die Spulenenden jeweils nach außen in die axiale Richtung des Statorkerns von einer Endfläche des Abschnitts hervorstehen, der die Haltenuten der Bauvorrichtung enthält.

Die Offenlegungsschrift DE 10 2018 104838 A1 zeigt ein Verfahren zum Herstellen eines Stators mit einer Wicklung mit geschränkten Luftspulen. Es werden Luftspulen mit Hilfe eines Wickelwerkzeugs gewickelt. Die Luftspulen werden in Haltenuten eines Fertigungswerkzeugs derart angeordnet, dass bei den Luftspulen jeweils ein erster Abschnitt auf einer Seite der Luftspule in einer Haltenut einer ersten Anordnung von Haltenuten an einem ersten Werkzeugteil und ein zweiter Abschnitt auf einer gegenüberliegenden Seite der Luftspule in einer Haltenut einer zweiten Anordnung von Haltenuten an einem zweiten Werkzeugteil angeordnet sind. Es wird eine jeweilige Schränkung für die Luftspulen hergestellt, indem das erste und das zweite Werkzeugteil relativ zueinander verlagert werden. Es werden die Luftspulen mit Schränkung in die Haltenuten des ersten Werkzeugteils derart verlagert, dass für die Luftspulen mit Schränkung der erste und der zweite Abschnitt jeweils in verschiedenen der Haltenuten des ersten Werkzeugteils angeordnet sind. Es wird ein Statorkern mit Kernnuten derart angeordnet, dass die Kernnuten jeweils einer Haltenut des ersten Werkzeugteils gegenüberliegend angeordnet werden. Es werden die Luftspulen mit Schränkung aus den Haltenuten des ersten Werkzeugteils in jeweils zugeordnete Kernnuten verlagert und der Statorkern mit den in den Kernnuten angeordneten Luftspulen mit Schränkung entnommen. Des Weiteren ist eine Vorrichtung zum Herstellen eines Stators mit einer Wicklung mit geschränkten Luftspulen offenbart.

Sowohl die Formung der dreidimensionalen Formspulen als auch deren Montage in dem Stator der elektrischen Maschine erfordern nachteilig einen hohen Fertigungs- und Zeitaufwand.

Es ist daher eine Aufgabe der Erfindung, ein geeignetes Werkzeug anzugeben, welches eine aufwandsgeringere Formung und Montage ermöglichen. Diese Aufgabe wird durch die jeweiligen Merkmale der unabhängigen Patentansprüche gelöst. Weiterbildungen sind jeweiligen abhängigen Patentansprüchen entnehmbar.

Ein erster Aspekt der Erfindung betrifft ein Werkzeug zum Einbringen und Formen von Spulen in einen Stator einer elektrischen rotierenden Maschine, wobei der Stator einen Statorkern aufweist, dessen zylindrischer Statorinnenraum einer Aufnahme eines um eine Rotationsachse drehbaren Rotors der Maschine dient und an dessen radialen Innenseite Statornuten zur Aufnahme erster und zweiter Spulenseiten einer Mehrzahl Spulen ausgebildet sind, und wobei das Werkzeug zumindest aufweist:
- einen zylindrischen Werkzeugkörper, welcher in dem Statorinnenraum anordenbar ist und relativ zu dem Stator um die Rotationsachse drehbar ist,
- eine Mehrzahl äußere Werkzeugnuten, welche an einer radialen Außenseite des Werkzeugkörpers angeordnet und jeweils ausgestaltet sind, eine zweite Spulenseite einer Spule aufzunehmen, wobei die zweite Spulenseite im Bereich eines Nutgrunds der äußeren Werkzeugnut anordenbar ist, und
- der Werkzeugkörper ausgestaltet ist, nach Einbringen der ersten Spulenseiten in einer bezüglich der Rotationsachse ersten Position relativ zu dem Stator eine Drehung zu einer zweiten Position relativ zu dem Stator auszuführen, um die erste und zweite Spulenseiten jeweils verbindende Spulenköpfe der Spulen zu formen.

Erfindungsgemäß ist die Mehrzahl äußere Werkzeugnuten jeweils ausgestaltet, eine erste Spulenseite einer Spule aufzunehmen, wobei die erste Spulenseite im Bereich einer Nutöffnung der äußeren Werkzeugnut anordenbar ist.

Erfindungsgemäß weist das Werkzeug eine Mehrzahl erste Werkzeugteile auf, welche in den äußeren Werkzeugnuten jeweils im Bereich des Nutgrunds radial unterhalb einer zweiten Spulenseite bewegbar angeordnet sind,
wobei
- die ersten Werkzeugteile jeweils ausgestaltet sind, mittels einer ersten Bewegung in radialer Richtung die erste Spulenseite in eine erste Statornut einzubringen, und
- die ersten Werkzeugteile ferner jeweils ausgestaltet sind, mittels einer zweiten Bewegung in radialer Richtung die zweite Spulenseite in eine zweite Statornut einzubringen.

Die Anzahl erste Werkzeugteile kann der Anzahl äußere Werkzeugnuten entsprechen, wenn jede Spule mittels eines einzigen ersten Werkzeugteils in die Statornuten einbringbar ist. Alternativ kann die Anzahl erste Werkzeugteile auch dem Doppelten der Anzahl äußere Werkzeugnuten entsprechen, wenn in jeder äußeren Werkzeugnut zwei erste Werkzeugteile, vorzugsweise jeweils im Bereich einer Stirnseite des Werkzeugkörpers angeordnet sind. Die ersten Werkzeugteile einer äußeren Werkzeugnut können gleichzeitig oder sequenziell bewegt werden. Eine Länge der ersten Werkzeugteile kann dabei beispielsweise weitgehend der Länge der äußeren Werkzeugnuten entsprechen, wodurch vorteilhaft eine gleichmäßige Ausbringung der Spulen aus den äußeren Werkzeugnuten erzielt werden kann.

Eine Länge des Werkzeugkörpers bzw. der äußeren Werkzeugnuten in axialer Richtung entspricht vorzugsweise zumindest der Länge des Stators bzw. der Statornuten. Hierdurch wird verhindert, dass die zweiten Spulenseiten während des Formens der Spulenköpfe derart verformt werden, dass diese in dem nachfolgenden Schritt nicht mehr in die Statornuten eingebracht werden können.

Ein Luftspalt zwischen der radialen Außenseite des Werkzeugkörpers und der radialen Innenseite des Statorkerns bzw. zwischen den Nutöffnungen der äußeren Werkzeugnuten und den Nutöffnungen der Statornuten ist vorzugsweise derart bemessen, dass einerseits das Werkzeug nach der Bestückung mit Spulen beschädigungsfrei in dem Stator angeordnet werden kann, andererseits ein sicheres Einbringen der Spulenseiten in die Statornuten und Formen der Spulenköpfe der Spulen durch das Werkzeug ermöglicht wird. Vorzugsweise wird bei der Anordnung des Werkzeugs in dem Statorinnenraum sichergestellt, dass der Luftspalt konstant bzw. nahezu konstant über den gesamten Umfang ist.

Der Werkzeugkörper weist beispielsweise eine um die Rotationsachse symmetrisch und radial unterhalb der inneren Werkzeugnuten angeordnete zylindrische Durchführung auf, die der Aufnahme einer Werkzeugwelle zur drehfesten oder drehbaren Lagerung des Werkzeugkörpers dient. Alternativ kann anstelle einer Durchführung jedoch an einer Stirnseite oder an beiden Stirnseiten des Werkzeugkörpers ein Zapfen aus dem Werkzeugkörpermaterial ausgebildet oder daran befestigt sein, welcher bzw. welche geeignet gelagert werden, um eine Drehung des Werkzeugkörpers um die Rotationsachse zu ermöglichen.

Erfindungsgemäß weist das Werkzeug ferner eine Mehrzahl innere Werkzeugnuten, welche radial unterhalb der äußeren Werkzeugnuten in dem Werkzeugkörper angeordnet sind, und eine Mehrzahl zweite Werkzeugteile, welche in den inneren Werkzeugnuten jeweils bewegbar angeordnet sind, auf, wobei die ersten und zweiten Werkzeugteile jeweils ausgestaltet sind, mittels einer ersten und einer zweiten Bewegung des zweiten Werkzeugteils, insbesondere in axialer Richtung, die erste und die zweite Bewegung des ersten Werkzeugteils in der äußeren Werkzeugnut in radialer Richtung zu bewirken, wobei die zweiten Werkzeugteile insbesondere von zumindest einer Stirnseite des Werkzeugkörpers aus bewegbar sind.

Vorzugsweise entspricht die Anzahl innere Werkzeugnuten der Anzahl äußere Werkzeugnuten, sodass radial unterhalb jeder äußeren Werkzeugnut eine jeweilige innere Werkzeugnut angeordnet ist. Alternativ kann jedoch eine geringere Anzahl innere Werkzeugnuten als äußere Werkzeugnuten vorgesehen sein, wobei eine innere Werkzeugnut radial unterhalb mehrerer äußerer Werkzeugnuten angeordnet ist und jedes zweite Werkzeugteil somit erste Werkzeugteile in mehreren äußeren Werkzeugnuten bewegt.

Die zweiten Werkzeugteile werden dabei in den inneren Werkzeugnuten beispielsweise ausschließlich in axialer Richtung bewegt, um korrespondierende Bewegungen der ersten Werkzeugteile in radialer Richtung zu bewirken. Dabei können die zweiten Werkzeugteile von einer oder beiden Stirnseiten des Werkzeugkörpers aus bewegt werden und sind hierdurch auch bei mit Spulenseiten bestückten äußeren Werkzeugnuten frei zugänglich. Insbesondere können die zweiten Werkzeugteile in einer Ausgangsposition, d.h. vor der ersten Bewegung, in axialer Richtung über die Stirnseite hinausragen und durch die Bewegungen in den Werkzeugkörper eingebracht werden.

Erfindungsgemäß weisen die ersten Werkzeugteile jeweils zumindest eine Finne und die zweiten Werkzeugteile jeweils zumindest einen Einschnitt auf, wobei die Finne und der Einschnitt ausgestaltet sind, dass eine Bewegung des zweiten Werkzeugteils in axialer Richtung die Bewegung des ersten Werkzeugteils in radialer Richtung bewirkt.

Beispielsweise weisen die Finne und der Einschnitt an aneinander liegenden Flanken bzw. Seiten jeweils eine bestimmte Steigung relativ zu der Rotationsachse auf, sodass eine Bewegung des zweiten Werkzeugteils in axialer Richtung ausschließlich eine Bewegung des ersten Werkzeugteils in radialer Richtung bewirkt.

Gemäß einer auf der vorstehenden Weiterbildung basierenden weiteren Weiterbildung des Werkzeugs ist in dem Werkzeugkörper zwischen einer äußeren Werkzeugnut und einer inneren Werkzeugnut ein Steg angeordnet, wobei der Steg zumindest eine Öffnung aufweist, welche die äußere Werkzeugnut mit der inneren Werkzeugnut räumlich verbindet, und ist die Finne des ersten Werkzeugteils ausgestaltet, durch die Öffnung hindurch in die innere Werkzeugnut zu ragen.

Gemäß dieser Weiterbildung ist die äußere Werkzeugnut durch einen sich über die Länge des Werkzeugkörpers erstreckenden Steg, insbesondere aus dem Werkzeugkörpermaterial, von der inneren Werkzeugnut räumlich getrennt. Diese durch den Steg entstehende räumliche Trennung wird nach dieser Weiterbildung durch eine Anzahl Öffnungen aufgehoben, welche die Interaktion der ersten und zweiten Werkzeugteile ermöglichen. Über die Länge des Werkzeugkörpers können eine oder mehrere Öffnungen zwischen der äußeren Werkzeugnut und der inneren Werkzeugnut vorgesehen sein. Sofern der Steg eine die gesamte Länge umfassende Öffnung aufweist, beispielsweise wenn anstelle eines sich über die gesamte Breite der Werkzeugnut erstreckenden Stegs nur eine Verjüngung der Werkzeugnut vorgesehen ist, können die äußere und die innere Werkzeugnut auch einen gemeinsamen Raum bilden, dessen Teilbereiche allein durch die Anordnung der ersten und zweiten Werkzeugteile definiert sind.

Aufgrund des Stegs ist die innere Werkzeugnut nicht bzw. nur über die Öffnungen von radial außen zugänglich. Das zweite Werkzeugteil ist daher beispielsweise derart ausgestaltet, dass es von einer Stirnseite des Werkzeugkörpers aus in die innere Werkzeugnut eingebracht sowie, wie vorstehend beschrieben, von der Stirnseite aus bewegt werden kann. Der bzw. die Einschnitte des zweiten Werkzeugteils sind entsprechend derart ausgestaltet, dass sie nicht in die Öffnung hineinragt, sondern eine geringere Höhe in radialer Richtung als die innere Werkzeugnut aufweist. Insbesondere können eine Finne des ersten und ein Einschnitt des zweiten Werkzeugteils nach deren Einbringen in die äußere und innere Werkzeugnuten derart ineinandergreifen, dass ein Entfernen des zweiten Werkzeugteils aus der inneren Werkzeugnut erst nach Entfernen des ersten Werkzeugteils aus der äußeren Werkzeugnut möglich ist. In der Grundkonfiguration vor dem Einbringen in den Stator sind die äußeren und inneren Werkzeugnuten des Werkzeugkörpers vorzugsweise bereits vollständig mit ersten und zweiten Werkzeugteilen bestückt.

Ein zweiter Aspekt der Erfindung betrifft schließlich eine Verwendung eines erfindungsgemäßen Werkzeugs zum Einbringen und Formen von Spulen in einen Stator einer elektrischen rotierenden Maschine.

Die Verwendung des Werkzeugs betrifft ein Verfahren zum Einbringen und Formen von Spulen in einen Stator einer elektrischen rotierenden Maschine, wobei der Stator einen Statorkern zur Aufnahme eines um eine Rotationsachse drehbaren Rotors in einem zylindrischen Statorinnenraum aufweist, und wobei der Statorkern an seiner radialen Innenseite eine Mehrzahl Statornuten zur Aufnahme einer Mehrzahl Spulen aufweist,
mit zumindest folgenden Schritten:
a) Formen der Spulen in eine jeweilige Grundform, wobei die Grundform eine erste Spulenseite und eine zweite Spulenseite aufweist, deren Enden durch einen jeweiligen Spulenkopf miteinander verbunden sind, wobei die erste Spulenseite und die zweite Spulenseite parallel in einer Ebene angeordnet sind,
b) Bestücken eines Werkzeugs mit den Spulen, wobei das Werkzeug einen zylindrischen Werkzeugkörper aufweist, an dessen radialen Außenseite eine der Mehrzahl Spulen entsprechende Mehrzahl äußere Werkzeugnuten angeordnet ist, und wobei das Werkzeug in dem Statorinnenraum anordenbar und relativ zu dem Statorkern um die Rotationsachse drehbar ist, durch Einbringen einer ersten und einer zweiten Spulenseite einer jeweiligen Spule in eine äußere Werkzeugnut, wobei die erste Spulenseite im Bereich einer Nutöffnung der äußeren Werkzeugnut und die zweite Spulenseite im Bereich eines Nutgrunds der äußeren Werkzeugnut angeordnet werden,
c) Einbringen, in einer bezüglich der Rotationsachse ersten Position des Werkzeugkörpers relativ zu dem Stator, der ersten Spulenseite der jeweiligen Spule in eine erste Statornut mittels des Werkzeugs, wobei die zweite Spulenseite in der äußeren Werkzeugnut verbleibt,
d) Ausführen einer Drehbewegung des Werkzeugkörpers relativ zu dem Stator um die Rotationsachse, wodurch die Spulenköpfe geformt werden, und
e) Einbringen, in einer bezüglich der Rotationsachse zweiten Position des Werkzeugkörpers relativ zu dem Stator, der zweiten Spulenseite der jeweiligen Spule in eine zweite Statornut mittels des Werkzeugs.

Es werden die Spulen des Stators der elektrischen Maschine somit zunächst in eine zweidimensionale Grundform geformt. Diese Formung erfolgt insbesondere entsprechend dem einleitend beschriebenen ersten Formungsschritt für Formspulen. Anschließend werden die derart geformten Spulen in eine jeweilige äußere Werkzeugnut des Werkzeugs angeordnet. Mittels des Werkzeugs werden alle ersten Spulenseiten der Spulen nachfolgend in erste Statornuten eingebracht, während die zweiten Spulenseiten zunächst in den äußeren Werkzeugnuten verbleiben. Eine Drehung des Werkzeugkörpers relativ zu dem Stator, wobei diese mittels einer Drehung des Werkzeugs und/oder des Stators erfolgen kann, führt zu einer gleichzeitigen und gleichmäßigen Formung der Spulenköpfe aller Spulen. Die Drehung erfolgt dabei um einen bestimmten Winkel bzw. Nutsprung, welcher dem Abstand der ersten Statornut von der zweiten Statornut entspricht. Schließlich werden alle zweiten Spulenseiten der Spulen in die zweiten Statornuten eingebracht.

Durch Einsatz des erfindungsgemäßen Werkzeugs wird der bislang für jede Spule gesondert durchzuführende zweite Formungsschritt, d.h. das Umformen der zweidimensionalen Spule in eine dreidimensionale Spule, durch einen für alle Spulen gemeinsamen und gleichzeitigen Schritt ersetzt, wodurch der für die dreidimensionale Formung der Formspulen erforderliche Aufwand vorteilhaft deutlich reduziert wird. Ebenso vorteilhaft wird durch das Einbringen der Spulenseiten in die Statornuten mittels des Werkzeugs der manuelle Aufwand deutlich reduziert, wobei sowohl das Bestücken der äußeren Werkzeugnuten mit den Spulenseiten als auch das Einbringen der Spulenseiten in die Statornuten vorteilhaft automatisierbar ist.

Nach dem Formen der jeweiligen Spule in Schritt a) in eine Grundform weisen die parallelen erste und die zweite Spulenseite beispielsweise einen bestimmten Abstand zueinander auf. Dieser Abstand ist dabei vorzugsweise derart bemessen, dass ein Luftspalt zwischen der radialen Innenseite des Statorkerns und der radialen Außenseite des Werkzeugkörpers überbrückt wird, nachdem in Schritt c) die erste Spulenseite in die Statornut eingebracht wurde. Damit wird vorteilhaft verhindert, dass es während der nachfolgend ausgeführten Drehung in Schritt d) zu einem möglichen Schleifen der zweiten Spulenseite an der Innenseite des Statorkerns bzw. der ersten Spulenseite an der Außenseite des Werkzeugkörpers kommt, wodurch die Isolierung der Spule oder die Spule selbst beschädigt werden kann, oder sich eine Spulenseite im Bereich des Luftspalts verkantet und damit die Drehung nicht abgeschlossen werden kann.

Die äußeren Werkzeugnuten des Werkzeugkörpers weisen jeweils eine Tiefe in radialer Richtung auf, die derart bemessen ist, dass die beiden Spulenseiten der in die Grundform geformten Spule vollständig bzw. nahezu vollständig in dieser angeordnet werden können. Vorzugsweise ist diese Tiefe jedoch derart bemessen, dass die erste Spulenseite im Bereich der Nutöffnung, d.h. im radial äußeren Bereich der Werkzeugnut, in unmittelbarer Nähe zur radialen Außenseite des Werkzeugkörpers angeordnet ist bzw. geringfügig über die Nutöffnung hinausragt, wodurch der erforderliche Hub der Bewegung zum Einbringen der ersten Spulenseite in die Statornut in Schritt c) minimiert wird. Die zweite Spulenseite der Spule ist hingegen im Bereich des Nutgrunds, d.h. im radial inneren Bereich der Werkzeugnut, angeordnet.

Eine Länge der Spulenseiten der jeweiligen Spule entspricht vorzugsweise zumindest der Länge des Statorkerns in axialer Richtung. Eine Spulenseite kann dabei eine größere Länge als die andere Spulenseite aufweisen, wobei die Länge der kürzeren Spulenseite wiederum mindestens der Länge des Stators entspricht. Eine Länge des Werkzeugkörpers in axialer Richtung entspricht vorzugsweise ebenfalls zumindest der Länge des Statorkerns, wodurch vorteilhaft verhindert wird, dass es bei der Formung der Spulenköpfe in Schritt d) zu einer Verformung eines Teils der zweiten Spulenseite kommt, welche im nachfolgenden Schritt e) ein Einbringen der zweiten Spulenseite in die zweite Statornut verhindern könnte.

Die Anzahl äußere Werkzeugnuten des Werkzeugs kann der Anzahl Statornuten entsprechen, sodass nach Schritt e) des Verfahrens Spulenseiten von zwei Spulen in einer jeweilige Statornut übereinander angeordnet sind, speziell eine erste Spulenseite einer ersten Spule unterhalb einer zweiten Spulenseite einer zweiten Spule in einer jeweiligen Statornut angeordnet ist. Alternativ kann die Anzahl äußere Werkzeugnuten des Werkzeugs nur einer Hälfte der Anzahl Statornuten entsprechen, sodass nach Schritt e) des Verfahrens in jeder der Statornuten nur eine Spulenseite angeordnet ist. Letzteres Ergebnis kann ebenso bei Einsatz des ersteren Werkzeugs erzielt werden, wenn nur in jeder zweiten äußeren Werkzeugnut eine Spule angeordnet wird.

Das Werkzeug weist weiterhin eine Mehrzahl erste Werkzeugteile, welche in den äußeren Werkzeugnuten im Bereich des Nutgrunds jeweils radial unterhalb einer Spule bewegbar angeordnet sind, eine Mehrzahl innere Werkzeugnuten, welche radial unterhalb der äußeren Werkzeugnuten in dem Werkzeugkörper angeordnet sind, und eine Mehrzahl zweite Werkzeugteile, welche in den inneren Werkzeugnuten jeweils bewegbar angeordnet sind, auf, wobei in Schritt c) von den zweiten Werkzeugteilen eine erste Bewegung ausgeführt wird, welche eine erste Bewegung der ersten Werkzeugteile in radialer Richtung bewirkt, wodurch die erste Spulenseite der jeweiligen Spule in die erste Statornut eingebracht wird, und in Schritt e) von den zweiten Werkzeugteilen eine zweite Bewegung ausgeführt wird, welche eine zweite Bewegung der ersten Werkzeugteile in radialer Richtung bewirkt, wodurch die zweite Spulenseite der jeweiligen Spule in die zweite Statornut eingebracht wird.

Es werden die ersten Spulenseiten der Mehrzahl Spulen in Schritt c) und/oder die zweiten Spulenseiten der Mehrzahl Spulen in Schritt e) jeweils gleichzeitig oder jeweils nacheinander, insbesondere aufgeteilt in Gruppen einer jeweiligen Mehrzahl Spulen, in die Statornuten eingebracht.

Insbesondere ein gleichzeitiges Einbringen der Spulenseiten in den Schritten c) und e) ermöglicht ein vorteilhaftes Beschleunigen des Verfahrens, wobei entsprechend alle zweiten Werkzeugteile in den inneren Werkzeugnuten gleichzeitig bewegt werden müssen.

Es werden die Spulen jeweils aus einem Flachdraht in die Grundform geformt, wobei der Flachdraht insbesondere eine Querschnittsfläche im Bereich zwischen einschließlich 4 mm² und einschließlich 30mm² aufweist. Eine Spulenseite kann entsprechend insbesondere eine Querschnittsfläche zwischen einschließlich 50mm² bis 300m² aufweisen.

Für Spulen von elektrischen Maschinen im einleitend genannten Bereich der Nennleistung verwendete Flachdrähte mit einer solchen Querschnittsfläche erfordern hohe Kräfte für die Formung der Spulenköpfe, weshalb diese bislang zunächst außerhalb des Stators in die dreidimensionale Form geformt und erst nach Formung in die Statornuten eingebracht wurden. Mittels des erfindungsgemäßen Werkzeugs können die Spulenköpfe in dem Schritt d) nunmehr vorteilhaft gleichzeitig sowie zudem gleichmäßig geformt werden.

Es wird das Werkzeug für die Bestückung der äußeren Werkzeugnuten mit den mit den ersten und zweiten Spulenseiten in Schritt b) außerhalb des Statorinnenraums angeordnet, das Werkzeug nach der Bestückung in dem Statorinnenraum angeordnet, und das Werkzeug nach dem Schritt e) aus dem Statorinnenraum entfernt.

Durch Anordnung des Werkzeugs außerhalb des Statorinnenraums kann die Bestückung der äußeren Werkzeugnuten mit den Spulenseiten einfacher als das Bestücken der Statornuten nach dem Stand der Technik erfolgen, da die Nutöffnungen der äußeren Werkzeugnuten frei zugänglich sind und die Spulenseiten in radialer Richtung in die Werkzeugnuten einbringbar sind. Hierfür kann vorzugsweise die Drehbarkeit des Werkzeugs genutzt werden, wodurch die zu bestückenden äußeren Werkzeugnuten derart ausgerichtet werden können, dass sie durch eine Montagefachkraft einfach und mit einer hohen Verlässlichkeit und Präzision bestückbar sind. Vorzugsweise können zumindest Teilschritte des Bestückens auch automatisiert durchgeführt werden.

Vorzugsweise werden die Spulenköpfe der Spulen in Schritt a) derart geformt, dass zumindest die Spulenköpfe im Bereich einer Stirnseite des Werkzeugkörpers nicht oder nur geringfügig über die radiale Außenseite des Werkzeugkörpers hinausragen. Hierdurch wird das Anordnen des mit den Spulenseiten bestückten Werkzeugkörpers in dem Statorinnenraum ermöglicht.

Es werden die Spulen vor dem Schritt a) oder nach dem Schritt a) und vor dem Schritt b) mit einem Isoliermaterial, insbesondere mit einem folienartigen Isoliermaterial, umwickelt.

Die Umwicklung der Spule mit einem Isoliermaterial dient einerseits der elektrischen Isolierung, welche insbesondere dann erforderlich ist, wenn Spulenseiten verschiedener Spulen in eine Statornut eingebracht werden, andererseits einer Wärmeabfuhr der sich während des Betriebs der elektrischen Maschine aufgrund des Stromflusses erwärmenden Spulen in den Stator, welcher in bekannter Weise aktiv oder passiv gekühlt wird. Vorzugsweise werden sowohl die Spulenseiten als auch die Spulenköpfe vor dem Einbringen in die äußere Werkzeugnut vollständig mit einem Isoliermaterial umwickelt, da die Spulenköpfe nach ihrer Formung in Schritt d) nur noch schwer zugänglich sind.

Ausführungsbeispiele der Erfindung werden bezugnehmend auf Figuren näher erläutert. Dabei zeigen:
- FIG 1: einen Statorkern einer elektrischen rotierenden Maschinen sowie ein erfindungsgemäßes Werkzeug in einer perspektivischen Ansicht,
- FIG 2: den Statorkern und das Werkzeug nach FIG 1 mit umliegend angeordneten Spulen,
- FIG 3: den Statorkern und das mit Spulen bestückte Werkzeug,
- FIG 4: das in dem Statorinnenraum des Statorkerns angeordnete bestückte Werkzeug,
- FIG 5: den Statorkern mit in Statornuten eingebrachten ersten Spulenseiten der Spulen,
- FIG 6: den Statorkern nach der Drehung des Werkzeugkörpers relativ zu dem Statorkern und mit in Statornuten eingebrachten zweiten Spulenseiten,
- FIG 7: das Werkzeug in einer Schnittdarstellung in einem ersten Zustand,
- FIG 8: das Werkzeug der FIG 7 in einem zweiten Zustand, und
- FIG 9: das Werkzeug nach FIG 7 bzw. 8 in einem dritten Zustand.

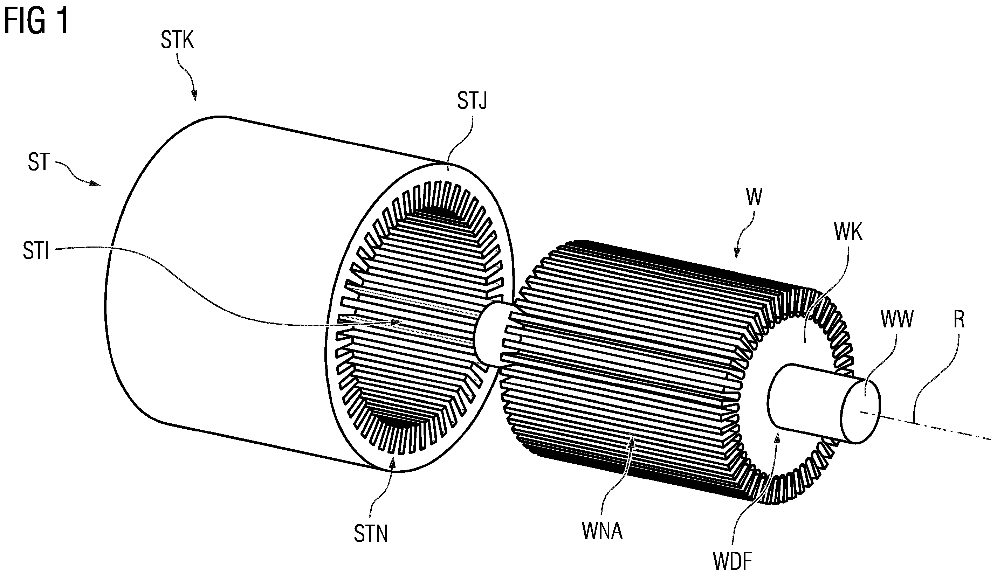

FIG 1 zeigt in einer perspektivischen Ansicht einen beispielhaften Stator ST einer elektrischen rotierenden Maschine sowie perspektivisch vor diesem einen Werkzeugkörper WK eines erfindungsgemäßen Werkzeugs W. Der Stator ST ist als ein so genannter Außenstator mit einem Statorkern STK aus einem geschichteten Blechpaket verwirklicht, in dessen Statorinnenraum STI ein um eine Rotationsachse R drehbarer Rotor der Maschine anordenbar ist. Der zylindrische Statorinnenraum STI ist in radialer Richtung durch eine Mehrzahl in Umfangrichtung angeordnete Statorzähne sowie in axialer Richtung durch Stirnflächen des Stators ST begrenzt. Die Statorzähne sind ausgehend von einem zylindrischen Statorjoch STJ in radialer Richtung ausgebildet und bilden eine entsprechende Mehrzahl Statornuten STN aus. Die Statornuten STN besitzen über die Länge des Statorinnenraums STI eine grundsätzlich einheitliche Breite in Umfangrichtung sowie eine einheitliche Tiefe in radialer Richtung, wobei sie im Bereich der Nutöffnungen zwischen den Statorzahnköpfen sowie im Bereich der Stirnflächen des Stators ST vollständig offen sind, sodass Spulen S bzw. Spulenseiten SS in radialer Richtung in diese einbringbar sind. Die Tiefe der Statornuten STN ist derart bemessen, dass jeweils zwei Spulenseiten SS übereinander liegend darin angeordnet werden können und im Bereich der Nutöffnung der Statornut STN ergänzend ein Nutverschlussstreifen aus einem Isoliermaterial angeordnet werden kann.

Das Werkzeug W weist einen zylindrischen Werkzeugkörper WK auf, welcher beispielsweise aus einem massiven Körper aus Metall oder einer Metalllegierung durch maschinelle Bearbeitung geformt ist. Alternativ kann der Werkzeugkörper WK entsprechend dem Statorkern STK aus einem Blechpaket bestehen, wobei die Ausprägungen in dem Querschnitt des Blechpakets durch Stanzen der Bleche verwirklicht werden. Die Länge des Werkzeugkörpers WK entspricht zumindest der Länge des Statorkerns STK, vorzugsweise überragt der Werkzeugkörper WK den Statorkern STK jedoch an jeder Stirnseite um beispielsweise einige Millimeter. Der Außendurchmesser des Werkzeugkörpers WK ist beispielsweise einige Millimeter kleiner als der Innendurchmesser des Stators ST, sodass nach Anordnen des Werkzeugs W in dem Statorinnenraum STI über den gesamten Umfang ein Luftspalt verbleibt.

Der Werkzeugkörper WK weist eine der Anzahl Statornuten STN entsprechende Anzahl äußere Werkzeugnuten WNA auf. Diese sind entsprechend den Statornuten über die gesamte Länge des Werkzeugkörpers WK einheitlich ausgebildet, d.h. besitzen eine einheitliche Breite in Umfangrichtung und eine einheitliche Tiefe in radialer Richtung. Insbesondere können die Werkzeugnuten WNA im Bereich der Stirnseiten des Werkzeugkörpers WK abgerundet sein, d.h. sich entsprechend einem bestimmten Radius weiten, um eine Beschädigung Spulenseiten deren Isolierung während des Formungsschritts zu vermeiden. Die Tiefe der äußeren Werkzeugnut WNA ist derart bemessen, dass sowohl zwei parallele Spulenseiten einer Spule als auch ein erstes Werkzeugteil übereinander liegend darin angeordnet werden können. Der Werkzeugkörper WK weist weiterhin eine Anzahl innere Werkzeugnuten auf, die radial unterhalb der äußeren Werkzeugnuten WNA angeordnet sind jeweils zumindest ein zweites Werkzeugteil aufnehmen, in FIG 1 jedoch nicht speziell dargestellt sind. Die Anzahl innere Werkzeugnuten entspricht vorzugsweise der Anzahl äußere Werkzeugnuten WNA, alternativ kann jedoch auch eine geringere Anzahl innere Werkzeugnuten als äußere Werkzeugnuten vorgesehen sein.

Ferner weist der Werkzeugkörper WK eine zentrale zylindrische Durchführung WDF auf, die der Aufnahme einer Werkzeugwelle WW dient. Die Werkzeugwelle WW dient einerseits der Lagerung des Werkzeugkörpers WK, andererseits ermöglicht sie eine rotatorische Bewegung bzw. Drehung des Werkzeugkörpers WK relativ zu dem Stator ST um eine Rotationsachse R. Die drehbare Lagerung des Werkzeugkörpers WK kann dabei derart verwirklicht sein, dass der Werkzeugkörper WK drehbar auf einer starr aufgehängten Werkzeugwelle WW gelagert ist, oder dass der Werkzeugkörper WK drehfest mit einer drehbar gelagerten Werkzeugwelle WW verbunden ist. Alternativ zu einer Durchführung WDF und einer darin angeordneten Werkzeugwelle WW kann ebenso ein jeweiliger Zapfen an einer oder an beiden Stirnseiten des Werkzeugkörpers WK ausgebildet oder mit diesem mechanisch verbunden sein, welcher wiederum drehbar gelagert ist. Alternativ kann ebenso der Werkzeugkörper WK unbeweglich gelagert sein, während der Stator ST beweglich gelagert ist und entsprechend eine relative Drehung zu dem starren Werkzeugkörper WK ausführen kann. Auch eine drehbare Lagerung sowohl des Werkzeugkörpers WK als auch des Stators ST, welche in gleicher Weise eine relative Drehbewegung der beiden zueinander ermöglicht, ist denkbar.

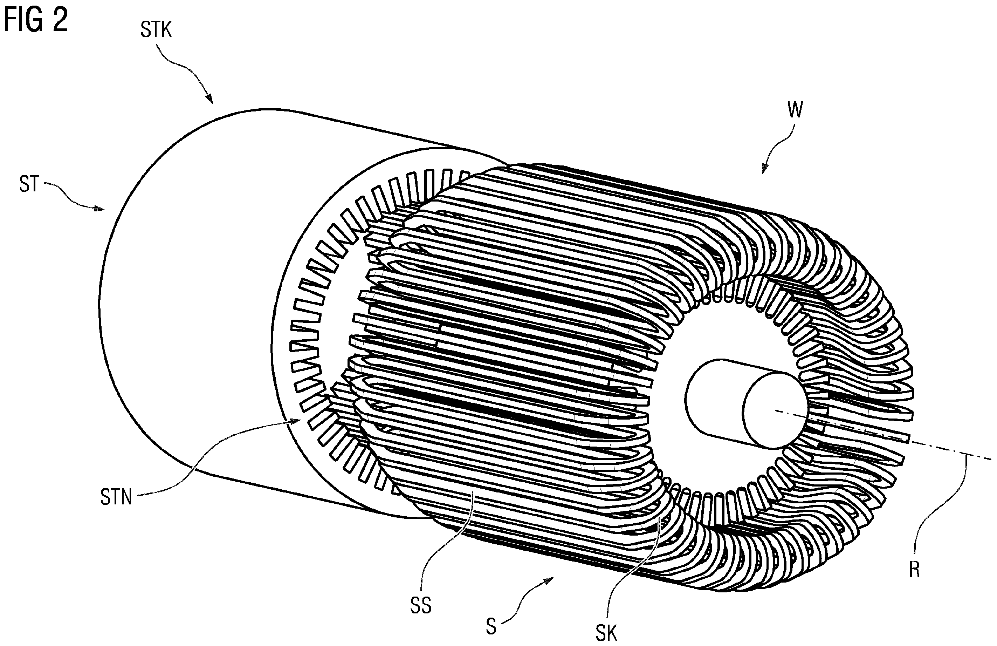

FIG 2 zeigt den Statorkern STK sowie das Werkzeug W der FIG 1 mit ergänzend um den Werkzeugkörper WK angeordneten Spulen S. Die Spulen S sind dabei schematisch von dem Werkzeugkörper WK beabstandet und mit einer Ausrichtung dargestellt, in welcher sie in die äußeren Werkzeugnuten WNA des Werkzeugkörpers WK einbringbar sind. Das Einbringen der Spulen S bzw. der Spulenseiten SS in die äußeren Werkzeugnuten WNA in radialer Richtung erfolgt beispielsweise durch eine Montagefachkraft oder automatisiert. Die Anzahl Spulen S entspricht der Anzahl äußere Werkzeugnuten des Werkzeugkörpers WK, sodass in jede der äußeren Werkzeugnuten WNA des Werkzeugkörpers WK Spulenseiten SS einer Spule S eingebracht werden.

Die Spulen S weisen in einer zweidimensionalen Grundform, mit der sie in die äußeren Werkzeugnuten WNA des Werkzeugkörpers WK eingebracht werden, jeweils zwei Spulenseiten SS sowie zwei Spulenköpfe SK auf, wobei letztere jeweilige Enden der Spulenseiten SS miteinander verbinden. Weiterhin weist jede Spule einen Spulenanschluss auf, der im Bereich eines der beiden Spulenköpfe angeordnet ist, in der FIG 2 jedoch nicht speziell dargestellt ist. Die Spulenseiten SS einer Spule S sind in der Grundform als Geradenstücke ausgestaltet, welche parallel in einer Ebene angeordnet sind und eine jeweilige Länge aufweisen, die zumindest der Länge des Werkzeugkörpers WK bzw. der äußeren Werkzeugnut WNA entspricht. Dabei kann die, nach Einbringen in die Werkzeugnut WNA, in radialer Richtung äußere erste Spulenseite SS1 beispielsweise ein längeres Geradenstück als die in radialer Richtung innere zweite Spulenseite SS2 aufweisen. Die Spulenköpfe SK überragen den Werkzeugkörper WK in axialer Richtung und weisen eine spezifische Länge und Form auf, die ermöglichen, dass einerseits die Spulenseiten SS in voneinander beabstandete unterschiedliche Statornuten STN eingebracht werden können, und dass andererseits die Spulenköpfe SK nach dem Einbringen der Spulenseiten SS in die Statornuten STN einen möglichst geringen Überstand in axialer Richtung aufweisen, um die axiale Länge der elektrischen Maschine zu begrenzen. Die Spulenköpfe SK überragen den Werkzeugkörper WK hingegen nicht bzw. nur begrenzt in axialer Richtung, sodass ein Einbringen des mit Spulen S bestückten Werkzeugkörpers WK in den Statorinnenraum STI von einer Stirnseite des Statorkerns STK möglich ist. Alternativ können die Spulenköpfe SK an einer Stirnseite des Werkzeugkörpers WK die radiale Außenseite des Werkzeugkörpers WK überragen, während die Spulenköpfe SK an der anderen Stirnseite des Werkzeugkörpers WK nicht bzw. nur begrenzt die radiale Außenseite des Werkzeugkörpers WK überragen.

Für eine elektrische Isolierung und einen mechanischen Schutz wird die Spule S in der Grundform bzw. bereits vor dem Formen in die Grundform beispielsweise mit mindestens einer Lage eines Glimmerbands sowie ergänzend mit einer oder mehreren Lagen eines Gewebebands vollständig umwickelt.

Wie in der FIG 2 dargestellt, ist der Werkzeugkörper WK während des Einbringens der Spulen S bzw. der Spulenseiten SS in die äußeren Werkzeugnuten WNA außerhalb des Statorinnenraums STI angeordnet. Dies ist insbesondere aufgrund der Grundform der Spule mit einem jeweiligen Spulenkopf SK an den Stirnseiten des Werkzeugkörpers erforderlich, welche ein Einbringen der Spulenseiten SS in die äußeren Werkzeugnuten WNA ausschließlich in axialer Richtung zulassen. Vorteilhaft ermöglicht die Anordnung des Werkzeugkörpers WK außerhalb des Statorinnenraums STI eine einfache manuelle oder automatisierte Bestückung des Werkzeugkörpers WK mit den Spulen S.

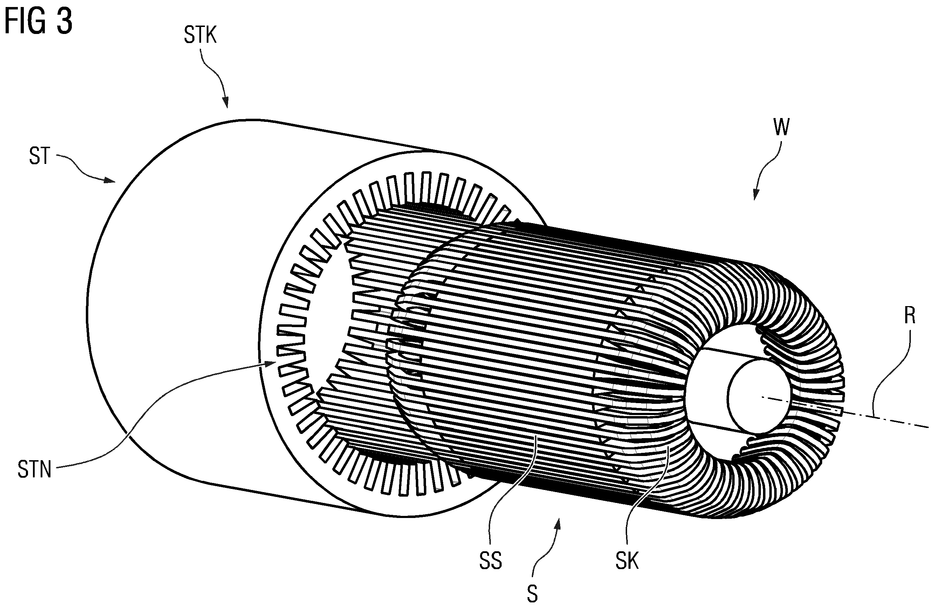

FIG 3 zeigt den Statorkern STK sowie das Werkzeug W der FIG 2 nach einer vollständigen Bestückung der äußeren Werkzeugnuten WNA des Werkzeugkörpers WK mit den Spulen S. Wie aus dieser Darstellung ersichtlich, schließen die in den Werkzeugnuten radial außenliegenden Spulenseiten SS bzw. ersten Spulenseiten SS1 der Spulen S bündig bzw. nahezu bündig mit den Nutöffnungen der äußeren Werkzeugnuten ab.

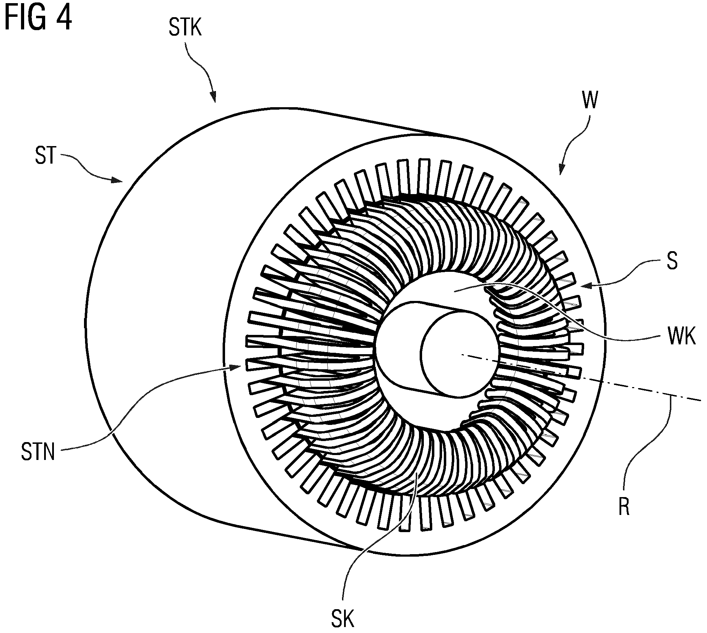

FIG 4 zeigt das Werkzeug W der FIG 3, nachdem es in den Statorinnenraum STI des Statorkerns STK eingeführt wurde, wobei das Einführen des Werkzeugs W über eine Stirnseite des Statorkerns STK wiederum manuell durch eine Montagefachkraft oder automatisiert erfolgen kann. Dabei wird das Werkzeug W und/oder der Statorkern STK derart in axialer Richtung ausgerichtet, dass die Stirnseiten des Werkzeugkörpers WK und die Stirnseiten des Statorkerns STK bündig abschließen, sofern beide eine gleiche Länge aufweisen, bzw. dass die Stirnseiten des Werkzeugkörpers WK die Stirnseiten des Statorkerns STK jeweils um eine bestimmte Länge überragen, sofern der Werkzeugkörper WK eine größere Länge aufweist. Ergänzend wird das Werkzeug W gegenüber dem Statorkern STK derart um die Rotationsachse R gedreht bzw. ausgerichtet, dass die Nutöffnungen der äußeren Werkzeugnuten WNA den Nutöffnungen der Statornuten STN direkt gegenüberliegen, sodass die zweiten Spulenseiten SS2 in die Statornuten STN eingebracht werden können.

Die äußeren Werkzeugnuten WNA weisen beispielsweise eine Breite in Umfangrichtung auf, welche weitgehend der Breite der Statornuten STN entspricht. Üblicherweise ist die Breite der Statornuten STN derart dimensioniert, dass die Spulenseiten SS1, SS2 darin kein Spiel aufweisen, auch um eine möglichst optimale Wärmeabfuhr aus den Spulen S in den Statorkern STK während des Betriebs der elektrischen Maschine zu erzielen. Bei einer vorhandenen Nutisolation beispielsweise aus einem Aramidpapier ist deren Dicke entsprechend zu berücksichtigen. Da für die äußeren Werkzeugnuten WNA eine solche Nutisolation nicht erforderlich ist, kann bei einer identischen Breite ein ausreichendes Spiel bereitgestellt werden, welches vorteilhaft verhindert, dass die Spulenseiten SS bzw. deren Umwicklung während des Einbringens in die äußeren Werkzeugnuten WNA sowie des nachfolgenden Einbringens in die Statornuten STN beschädigt werden. Eine solche Beschädigung wäre insbesondere kritisch, da diese nach dem vollständigen Einbringen der Spulenseiten SS in die Statornuten STN praktisch nicht mehr erkennbar ist.

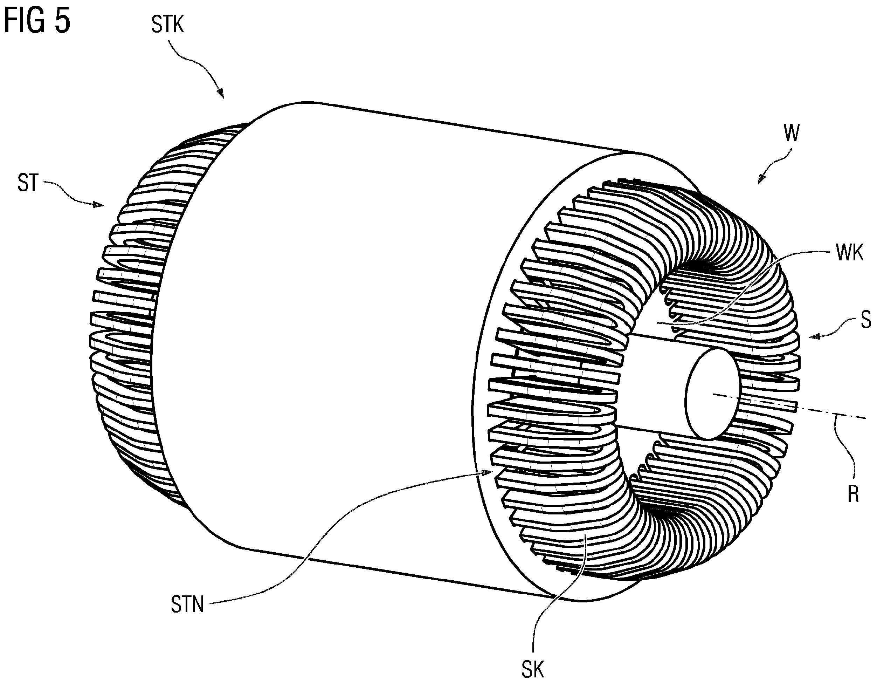

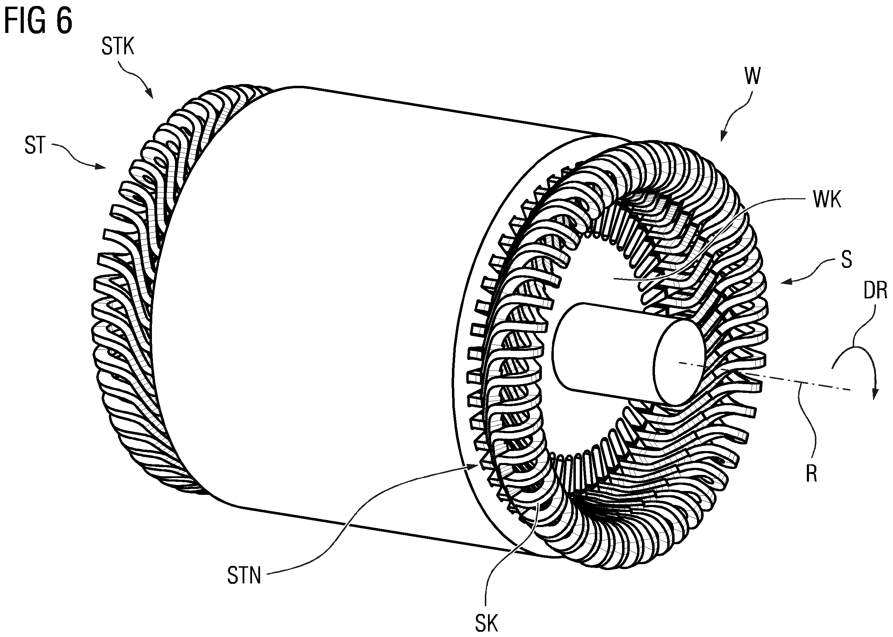

FIG 5 und 6 zeigen ausgehend von dem in FIG 4 dargestellten Zustand des bestückten und in dem Statorinnenraum STI angeordneten und ausgerichteten Werkzeugs W die nachfolgenden Schritte des Einbringens der ersten Spulenseiten SS1 der Spulen S in die Statornuten STN, des Formens der Spulenköpfe SK sowie des Einbringens der zweiten Spulenseiten SS2 der Spulen S in die Statornuten STN. Diese Schritte können wiederum manuell durch eine Montagefachkraft oder automatisiert bzw. teilautomatisiert ausgeführt werden.

FIG 5 zeigt einen Zustand nach dem Schritt des Einbringens der ersten Spulenseiten SS1, d.h. der in den äußeren Werkzeugnuten WNA im Bereich der jeweiligen Nutöffnung angeordneten Spulenseiten der Spulen S, in die Statornuten STN. Hierfür werden die beiden Spulenseiten SS1, SS2 in den äußeren Werkzeugnuten WNA in radialer Richtung bewegt. Der Betrag der Bewegung ist dabei derart bemessen, dass die jeweilige erste Spulenseite SS1 vollständig bzw. nahezu vollständig in eine jeweilige Statornut STN eingebracht wird, während die jeweilige zweite Spulenseite SS2 vollständig bzw. nahezu vollständig in der äußeren Werkzeugnut WNA verbleibt. Ein in der Grundform der Spule S bestehender Abstand zwischen den beiden Spulenseiten SS1, SS2 überbrückt dabei den Luftspalt LS zwischen der radialen Außenseite des Werkzeugkörpers WK und der radialen Innenseite des Statorkerns STK. Die Grundform der Spule S, insbesondere die Form der Spulenköpfe SK, bleibt aufgrund der Rigidität der Spule S während dieses Vorgangs zunächst weitgehend erhalten, insbesondere werden die Spulenseiten SS1, SS2 nicht gestaucht, sodass der Abstand zwischen diesen konstant bleibt. Das Einbringen der ersten Spulenseiten SS1 in die Statornuten STN kann für alle Spulen S gleichzeitig oder sequenziell, insbesondere in Gruppen einer jeweiligen Mehrzahl Spulen S, erfolgen.

FIG 6 zeigt einen Zustand nach dem Schritt des Ausführens einer Drehbewegung des Werkzeugkörpers WK relativ zu dem Stator ST sowie dem anschließenden Schritt des Einbringens der zweiten Spulenseiten SS2 der Spulen S in die Statornuten STN des Stators ST.

Die Drehbewegung wird ausgeführt, um die Werkzeugnuten WNA aus der ersten Position relativ zu den Statornuten STN, in welcher die ersten Spulenseiten SS1 in die Statornuten STN eingebracht wurden, in eine zweite Position relativ zu den Statornuten STN zu bringen, in welcher die zweiten Spulenseiten SS2 in die Statornuten STN eingebracht werden. Auf diese Weise wird der so genannte Nutsprung zwischen den beiden Spulenseiten, d.h. der räumliche Abstand der ersten Spulenseite SS1 zu der zweiten Spulenseite SS2 einer Spule S in Umfangrichtung des Statorkerns STK, verwirklicht. Die relative Drehbewegung erfolgt beispielsweise durch eine Drehung des Werkzeugkörpers WK um die Rotationsachse R in der mittels eines Pfeils angegebenen Drehrichtung DR, während der Statorkern STK ortsfest ist. Dabei bewirkt die relative Drehbewegung nicht nur ein Auseinanderbewegen bzw. Spreizen der beiden Spulenseiten SS1, SS2 der jeweiligen Spule S, sondern auch ein dreidimensionales Formen der Spulenköpfe SK.

Nach der relativen Drehbewegung bzw. dem ersten Formen der Spulenköpfe SK durch Spreizen der beiden Spulenseiten SS1, SS2 der Spulen werden die zweiten Spulenseiten SS2 der Spulen S in die Statornuten STN eingebracht. Dies erfolgt durch Bewegen der zweiten Spulenseiten SS2 in radialer Richtung mittels des Werkzeugs W. Der Betrag der Bewegung in radialer Richtung ist dabei vorzugsweise derart bemessen, dass die zweiten Spulenseiten SS2 soweit in die Statornuten STN eingebracht werden, dass sie unmittelbar radial oberhalb einer ersten Spulenseiten SS1 angeordnet sind. Da in den Statornuten STN jeweils erste und zweite Spulenseiten SS1, SS2 unterschiedlicher Spulen S angeordnet sind, entspricht deren Annäherung keiner Stauchung der in der Grundform parallelen und beabstandeten Spulenseiten SS1, SS2 einer Spule S, sondern einem weiteren Teilschritt bei der dreidimensionalen Formung der Spulen S. Durch die Bewegung der zweiten Spulenseiten SS2 in radialer Richtung erfolgt ein zweites Formen der Spulenköpfe SK der Spulen S.

Nach dem Einbringen der zweiten Spulenseiten SS2 in die Statornuten STN kann das Werkzeug W über eine Stirnseite des Statorkerns STK wieder aus dem Statorinnenraum STI entfernt werden. Hierbei sollte ergänzend sichergestellt werden, dass die geformten Spulenköpfe SK nicht radial in den Bereich der Stirnseite des Werkzeugkörpers WK hineinragen und mit dieser kollidieren können. Hierfür können, sofern erforderlich, die Spulenköpfe SK mittels eines geeigneten weiteren Werkzeugs ergänzend in radialer Richtung verformt werden.

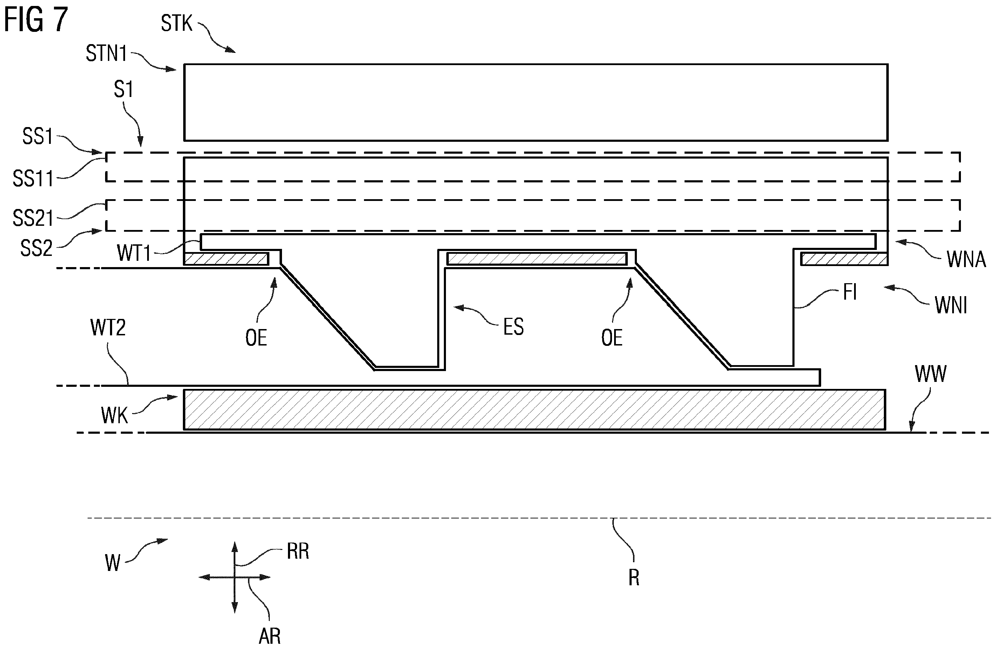

FIG 7 bis 9 zeigen jeweils eine schematische Schnittdarstellung des Aufbaus eines erfindungsgemäßen Werkzeugs W zur Erläuterung des Ausbringens der Spulenseiten SS11, SS21 einer Spule S1 aus einer äußeren Werkzeugnut WNA des Werkzeugkörpers WK bzw. des Einbringens dieser Spulenseiten SS11, SS21 in unterschiedliche, um einen gewünschten Nutsprung entfernt voneinander angeordnete, Statornuten STN1, STNn eines Statorkerns STK mittels erster und zweiter Werkzeugteile WT1, WT2.

Die FIG 7 zeigt dabei einen Längsschnitt durch den Werkzeugkörper WK des Werkzeugs W entlang der zentralen Rotationsachse R, wobei der Schnitt mittig durch eine innere WNI und eine äußere Werkzeugnut WNA geht und lediglich der Bereich oberhalb der Rotationsachse R dargestellt ist. Radial oberhalb des Werkzeugkörpers WK bzw. der äußeren Werkzeugnut WNA und durch einen Luftspalt LS getrennt ist eine erste Statornut STN1 bzw. zweite Statornut STNn des Statorkerns STK ergänzend dargestellt. Ein Statorjoch des Statorkerns STK ist hingegen nicht gesondert dargestellt.

Das Werkzeug W weist einen zylindrischen Werkzeugkörper WK mit einem bestimmten Durchmesser und einer bestimmten Länge auf, welche an den Durchmesser des Statorinnenraums STI bzw. an die Länge des Statorkerns STK angepasst sind. Wie vorstehend bereits beschrieben, ist der Durchmesser des Werkzeugkörpers WK derart bemessen, dass die radiale Außenseite des Werkzeugkörpers WK und die radiale Innenseite des Statorkerns STK durch einen über den Umfang des Werkzeugkörpers WK bzw. des Statorkerns STK konstanten bzw. nahezu konstanten Luftspalt LS voneinander beabstandet sind, während die Länge des Werkzeugkörpers WK bzw. der äußeren Werkzeugnuten WNA zumindest der Länge des Statorkerns STK entspricht.

Ausgehend von der Rotationsachse R weist der Werkzeugkörper WK eine Durchführung WDF mit einem bestimmten Durchmesser zur Aufnahme einer entsprechend angepassten Werkzeugwelle WW auf, auf welcher der Werkzeugkörper WK drehfest gelagert ist. In radialer Richtung RR oberhalb eines sich über die vollständige Länge erstreckenden Stegs des Werkzeugkörpers WK ist eine durchgängige innere Werkzeugnut WNI angeordnet, welche der Aufnahme eines zweiten Werkzeugteils WT2 dient. Das zweite Werkzeugteil WT2 ist insbesondere derart ausgestaltet, dass es von einer Stirnseite des Werkzeugkörpers WK aus in der inneren Werkzeugnut WNI angeordnet und durch eine Montagefachkraft bzw. automatisiert in dieser in axialer Richtung AR bewegbar ist. Zur Vereinfachung der Darstellung sind über die Stirnseiten des Werkzeugkörpers WK hinausragende Bestandteile des zweiten Werkzeugteils WT2 nicht spezifisch dargestellt.

In radialer Richtung RR oberhalb der inneren Werkzeugnut WNI ist ein weiterer Steg des Werkzeugkörpers WK vorgesehen, welcher die innere Werkzeugnut WNI von der ebenfalls durchgängigen äußeren Werkzeugnut WNA räumlich trennt, wobei die äußere Werkzeugnut WNA wiederum in radialer Richtung RR oberhalb des weiteren Stegs angeordnet ist. Der weitere Steg weist über die Länge des Stegs verteilt angeordnete Öffnungen OE bzw. Durchbrüche auf, wobei diese beispielsweise im Bereich der Stirnseiten des Werkzeugkörpers WK angeordnet sind. Die Öffnungen OE dienen dazu, die innere und äußere Werkzeugnuten WNI, WNA räumlich zu verbinden.

In radialer Richtung RR oberhalb des weiteren Stegs des Werkzeugkörpers WK bzw. im Nutgrund der äußeren Werkzeugnut WNA sind erste Werkzeugteile WT1 angeordnet. Nach dem Beispiel der FIG 7 weist das erste Werkzeugteil WT1 an einer radialen Oberseite eine durchgängige Oberfläche auf, mittels welcher das erste Werkzeugteil eine zweite Spulenseite SS21 kontaktiert. Weiterhin weist das erste Werkzeugteil WT1 an einer Unterseite weitere Flächen, mittels derer sich das erste Werkzeugteil WT1 auf dem weiteren Steg des Werkzeugkörpers WK abstützt, sowie zwei Ausprägungen in radialer Richtung RR in Form einer jeweiligen Finne FI auf. Die Finnen FI ragen durch die Öffnung OE in die innere Werkzeugnut WNI hinein und weisen jeweils eine Flanke mit einer bestimmten Steigung bzw. mit einem bestimmten Winkel relativ zu der Rotationsachse R auf.

Das zweite Werkzeugteil WT2 weist entsprechende Einschnitte ES zur Aufnahme der Finnen FI des ersten Werkzeugteils WT1 auf, wobei die Einschnitte jeweils eine Flanke mit einer Steigung aufweisen, welche mit der Steigung der Finnen FI des ersten Werkzeugteils WT1 kompatibel ist. Über die Flanken der Einschnitte ES und Finnen FI stehen das erste WT1 und das zweite Werkzeugteil WT2 miteinander in mechanischem Kontakt.

Alternativ zu der dargestellten räumlichen Trennung der äußeren WNA und inneren Werkzeugnut WNI mittels eines weiteren Stegs mit über die Länge verteilt angeordneten Öffnungen können äußere und innere Werkzeugnut WNA, WNI auch als eine einzige, in radialer Richtung RR vom Nutgrund bis zur Nutöffnung durchgehende Werkzeugnut ausgestaltet sein. In diesem Fall können eine innere und eine äußere Werkzeugnut als Teilbereiche der Werkzeugnut betrachtet werden, welche durch die Anordnung des zweiten bzw. ersten Werkzeugteils unterschieden werden. Eine solche einzige Werkzeugnut kann beispielsweise im Bereich des in FIG 5 dargestellten weiteren Stegs eine Verjüngung aufweisen, welche die Breite in der Werkzeugnut in diesem Bereich über die gesamte Länge des Werkzeugkörpers WK verringert. Diese Verjüngung kann als eine die gesamte Länge der Werkzeugnut umfassende Öffnung betrachtet werden. Das zweite Werkzeugteil WT2 weist gegenüber dieser Verjüngung eine größere Breite auf, welche beispielsweise weitgehend der Breite der Werkzeugnut entspricht. Hierdurch kann das zweite Werkzeugteil WT2 entsprechend in axialer Richtung AR in der inneren Werkzeugnut bewegt werden, jedoch nicht in der radialen Richtung RR. Die Finnen FI des ersten Werkzeugteils WT1 weisen hingegen eine geringere Breite als die Verjüngung auf, sodass sie in radialer Richtung RR bewegbar sind. Vorzugsweise weisen die Finnen FI jedoch im unteren Bereich der Flanken, d.h. im Bereich der Kontaktfläche mit dem Einschnitt ES des zweiten Werkzeugteils WT2 jeweils eine Verdickung bzw. eine größere Breite als die Verjüngung auf. Vorzugsweise ist ebenso der obere Bereich des ersten Werkzeugteils WT1, welcher über die Oberfläche in Kontakt mit der zweiten Spulenseite SS2 gebracht wird, breiter als die Verjüngung ausgeführt. Ein Profil des ersten Werkzeugteils kann somit weitgehend dem des lateinischen Großbuchstabens I entsprechen.

Eine solche alternative Ausgestaltung der Werkzeugnut sowie der ersten und zweiten Werkzeugteile ermöglicht einerseits, beide Werkzeugteile von einer Stirnseite des Werkzeugkörpers in die Werkzeugnut einzuführen, andererseits ein Herausfallen des ersten Werkzeugteils in radialer Richtung aus der Werkzeugnut zu verhindern. Vorteilhaft können hierdurch alle Werkzeugnuten bereits vor dem Einführen des Werkzeugs in den Statorinnenraum mit ersten und zweiten Werkzeugteilen bestückt werden, weiterhin können die Werkzeugteile in den Werkzeugnuten verbleiben, wenn das Werkzeug wieder aus dem Statorinnenraum entfernt wird.

FIG 7 zeigt einen ersten Zustand des Werkzeugs W, in einer ersten rotatorischen Position relativ zu dem Stator ST. In diesem ersten Zustand ist das außerhalb des Stators ST mit Spulen S bestückte Werkzeug W in dem Statorinnenraum STI angeordnet und derart ausgerichtet, dass die äußeren Werkzeugnuten WNA und die Statornuten ST einander direkt gegenüber liegen. Erste und zweite Werkzeugteile WT1, WT2 befinden sich in dem ersten Zustand in einer jeweiligen Ausgangsposition, in welcher das erste Werkzeugteil WT1 an dem weiteren Steg des Werkzeugkörpers WK anliegt.

Erste und zweite Spulenseiten SS11, SS21 der in eine Grundform geformten Spule S1 sind übereinander liegend in der äußeren Werkzeugnut WNA angeordnet Dabei weisen die Geradenstücke der Spulenseiten SS11, SS21 einen Abstand zueinander auf, welcher weitgehend dem des Luftspalts LS zwischen der Nutöffnung der Statornut STN1 und der Nutöffnung der äußeren Werkzeugnut WNA entspricht. Abhängig von der Tiefe der äußeren Werkzeugnut WNA und dem Querschnitt der Spulenseiten SS1, SS2 kann dieser Abstand dazu führen, dass die zweite Spulenseite SS21 nach der Bestückung im Bereich des Nutgrunds der Werkzeugnut WNA angeordnet ist, während die erste Spulenseite SS11 im Bereich der Nutöffnung der Werkzeugnut WNA angeordnet ist und, wie beispielhaft dargestellt, geringfügig über die radiale Außenseite des Werkzeugkörpers WK hinaus in den Luftspalt LS hineinragt. Ein solcher Überstand der ersten Spulenseite SS11 in den Statorinnenraum STI sollte vorzugsweise deutlich kleiner als der Luftspalt LS sein, um eine mögliche Beschädigung der ersten Spulenseiten SS1 beim Einführen des Werkzeugs W in den Statorinnenraum STI zu vermeiden.

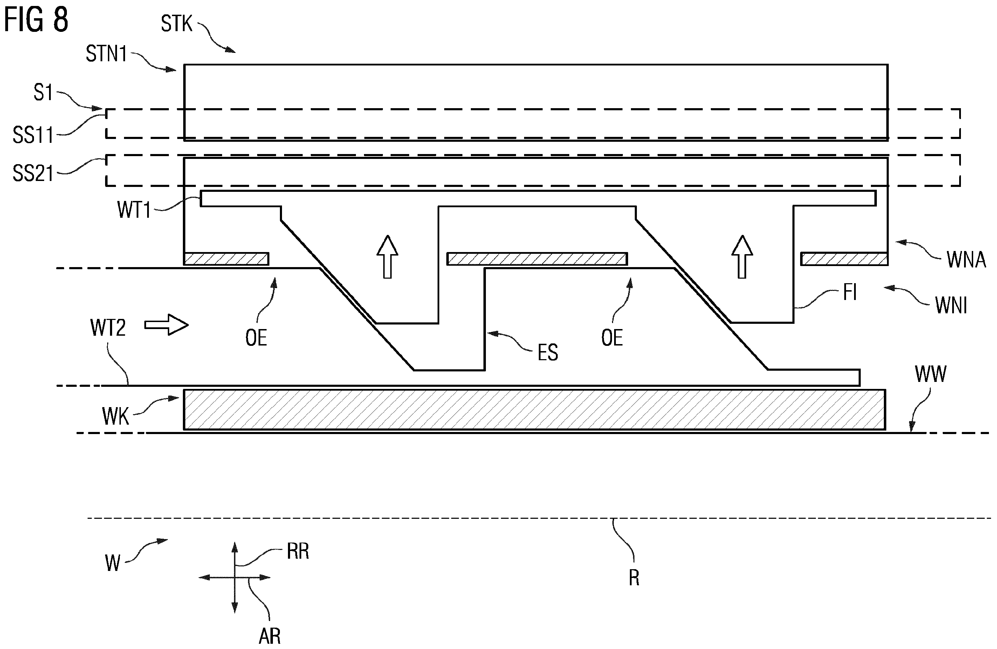

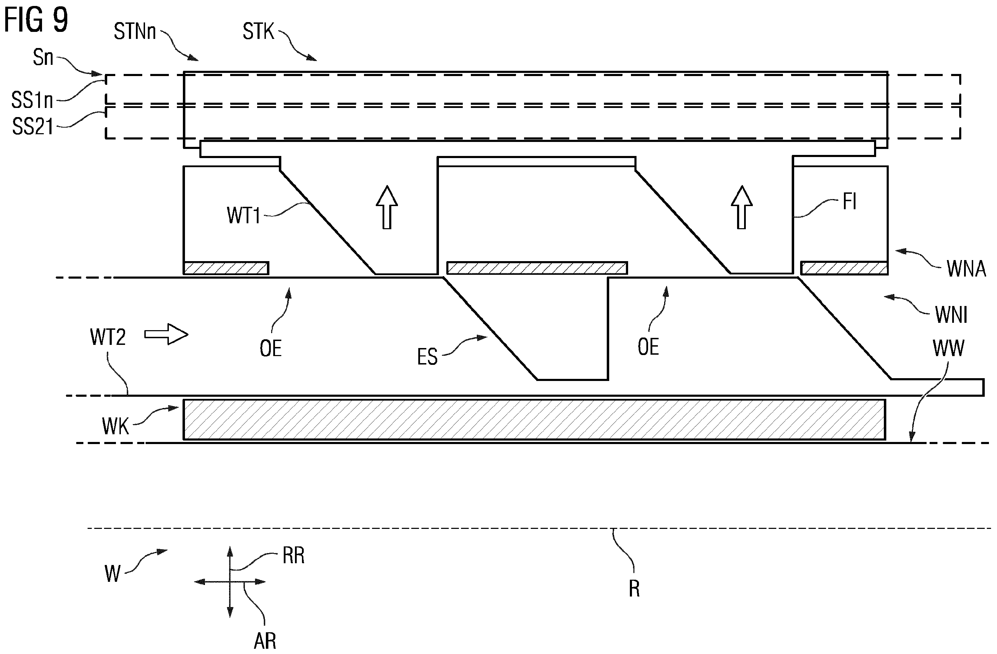

Zur besseren Unterscheidung sind die Spulenseiten SS11, SS21 in FIG 7 bis 9 durch unterbrochene Linien angegeben, wobei nur jeweils eine Teillänge der Geradenstücke dargestellt ist und die in axialer Richtung AR anschließenden Spulenköpfe SK nicht speziell dargestellt sind. Der für die Spulenseiten und die Spule ergänzend verwendete Index 1 dient als Hinweis darauf, dass die erste Spulenseite und Statornut in FIG 7 und 8 von der ersten Spulenseite und Statornut in FIG 9 unterschiedlich sind.

FIG 8 zeigt einen zweiten Zustand des Werkzeugs W. Dieser zweite Zustand wird durch eine Bewegung des zweiten Werkzeugteils WT2 in axialer Richtung AR erzielt. Wie mittels eines in die axiale Richtung AR weisenden Pfeils angegeben, wird das zweite Werkzeugteil WT2 in Richtung der Mitte des Werkzeugkörpers WK bewegt, d.h. weiter in die innere Werkzeugnut WNI eingebracht. Die hierfür erforderliche Kraft wird beispielsweise durch eine Montagefachkraft oder maschinell aufgebracht. Die Bewegung des zweiten Werkzeugteils WT2 in axialer Richtung AR bewirkt aufgrund des mechanischen Kontaktes der Flanken der Finnen FI mit den Flanken der Einschnitte ES eine Bewegung des ersten Werkzeugteils WT1 in der äußeren Werkzeugnut WNA in radialer Richtung RR. Diese Bewegung des ersten Werkzeugteils WT1 bewirkt wiederum ein Ausbringen der ersten Spulenseite SS11 aus der äußeren Werkzeugnut WNA und in die gegenüberliegende erste Statornut STN1 des Statorkerns STK. Der Abstand der beiden Spulenseiten SS11, SS21 bleibt aufgrund der Rigidität der Spule S1 während der Bewegung nahezu konstant. Dieser konstant gehaltene Abstand überbrückt, wie in FIG 8 dargestellt, nunmehr den Luftspalt LS zwischen der radialen Innenseite des Statorkerns STK und der radialen Außenseite des Werkzeugkörpers WK.

In diesem Zustand bzw. mit dieser Anordnung der ersten und zweiten Spulenseiten SS11, SS21 der Spule S1, bzw. wenn alle Spulen S, mit denen die äußeren Werkzeugnuten WNA des Werkzeugkörpers WK bestückt sind, in einen solchen Zustand sind, erfolgt die Drehbewegung des Werkzeugkörpers WK relativ zu dem Stator ST bzw. dem Statorkern STK um die Rotationsachse R, wodurch die Spulenköpfe SK aller Spulen S gleichzeitig geformt werden.

Nach Abschluss der Drehbewegung des Werkzeugkörpers WK relativ zu dem Statorkern STK entsprechend dem gewünschten Nutsprung sind diese in einer zweiten rotatorischen Position relativ zueinander angeordnet, wie sie in FIG 9 dargestellt ist. In dieser zweiten rotatorischen Position liegt die äußere Werkzeugnut WNA, in welcher die zweite Spulenseite SS21 angeordnet ist, einer anderen, zweiten Statornut STNn gegenüber, in welcher zuvor eine erste Spulenseite SS1n einer anderen, zweiten Spule Sn eingebracht wurde.

FIG 9 zeigt schließlich einen dritten Zustand des Werkzeugs W. Dieser Zustand wird durch eine weitere Bewegung des zweiten Werkzeugteils WT2 in der inneren Werkzeugnut WNI in axialer Richtung AR erzielt. Diese Bewegung bewirkt wiederum eine weitere Bewegung des ersten Werkzeugteils WT1 in radialer Richtung RR und damit ein Ausbringen auch der zweiten Spulenseite SS21 aus der äußeren Werkzeugnut WNA in die der äußeren Werkzeugnut WNA nunmehr gegenüberliegende zweite Statornut STNn.

Durch das Einbringen der zweiten Spulenseite SS21 in die zweite Statornut STNn wird auch die darin angeordnete andere erste Spulenseite SS1n weiter in Richtung des Nutgrunds der anderen Statornut STNn bewegt, sofern sie in dieser noch nicht bereit zuvor angeordnet war. Vorzugsweise ist der Hub der Bewegung des ersten Werkzeugteils WT1 in radialer Richtung RR derart bemessen, dass die andere erste Spulenseite SS1n bis in den Bereich des Nutgrunds bewegt wird und die zweite Spulenseite SS21 über dieser, gegebenenfalls durch einen Streifen aus einem Isoliermaterial getrennt, in der zweiten Statornut STNn angeordnet wird. Wie in FIG 9 dargestellt, wird die zweite Spulenseite SS2n dabei etwas tiefer als die Nutöffnung der zweiten Statornut STNn eingebracht, die Oberfläche des ersten Werkzeugteils WT1 somit bis in die zweite Statornut STNn eingeführt. Dies ermöglicht beispielsweise, nachfolgend im Bereich der Nutöffnung ergänzend einen Nutverschlussstreifen aus einem Isoliermaterial anzuordnen.

In der Endposition des ersten Werkzeugteils WT1 können dessen Finnen FI, wie in FIG 9 beispielhaft dargestellt, auf dem zweiten Werkzeugteil WT2 abgestützt sein. Hierdurch kann vorteilhaft ein gleichmäßiges Einbringen der Spulenseiten SS1n, SS21 über die gesamte Länge der zweiten Statornut STNn sichergestellt werden. Weiterhin muss in dieser Position keine Kraft in axialer Richtung AR auf das zweite Werkzeugteil WT2 ausgeübt werden. Alternativ zu der dargestellten Ausgestaltung der Finnen FI der ersten Werkzeugteile WT1 können deren Flanken jeweils einen ergänzenden Absatz aufweisen, mittels dessen die Finnen nach dem ersten Schritt des Ausbringens der ersten Spulenseite SS1 aus der äußeren Werkzeugnut WNA in gleicher Weise auf dem zweiten Werkzeugteil WT2 abgestützt werden können. Hierdurch muss auch in dieser Position, in welcher die Drehung des Werkzeugs W relativ zu dem Stator ST erfolgt, vorteilhaft keine Kraft auf das zweite Werkzeugteil WT2 ausgeübt werden.

Nach erfolgtem Einbringen der zweiten Spulenseiten SS2 der Spulen in eine jeweils andere Statornut STN werden die zweiten Werkzeugteile WT2 wieder in die in FIG 7 dargestellte Ausgangsposition zurückgebracht, sodass keine Krafteinwirkung auf die zweiten Spulenseiten SS2 durch die ersten Werkzeugteile WT1 mehr besteht. In diesem Zustand kann das Werkzeug W beispielsweise wieder über die in FIG 7 bis 9 dargestellte linke Stirnseite aus dem Statorinnenraum STI entfernt werden.

### Bezugszeichenliste

- AR: Axiale Richtung
- DR: Drehrichtung
- ES: Einschnitt
- FI: Finne
- LS: Luftspalt
- OE: Öffnung
- R: Rotationsachse
- RR: Radiale Richtung
- S,S1,Sn: Spule
- SK: Spulenkopf
- SS: Spulenseite
- SS1,SS11,SS1n: erste Spulenseite
- SS2,SS21: zweite Spulenseite
- ST: Stator
- STI: Statorinnenraum
- STJ: Statorjoch
- STK: Statorkern
- STN,STN1,STNn: Statornut
- W: Werkzeug
- WDF: (Werkzeug-) Durchführung
- WK: Werkzeugkörper
- WNA: äußere Werkzeugnut
- WNI: innere Werkzeugnut
- WT1: erstes Werkzeugteil
- WT2: zweites Werkzeugteil
- WW: Werkzeugwelle

## Patentansprüche

1. Werkzeug (W) zum Einbringen und Formen von Spulen (S) in einen Stator (ST) einer elektrischen rotierenden Maschine, wobei der Stator (ST) einen Statorkern (STK) aufweist, dessen zylindrischer Statorinnenraum (STI) einer Aufnahme eines um eine Rotationsachse (R) drehbaren Rotors der Maschine dient und an dessen radialen Innenseite Statornuten (STN) zur Aufnahme erster und zweiter Spulenseiten (SS1, SS2) einer Mehrzahl Spulen (S) ausgebildet sind, und wobei das Werkzeug (W) zumindest aufweist:
- einen zylindrischen Werkzeugkörper (WK), welcher in dem Statorinnenraum (STI) anordenbar ist und relativ zu dem Stator (ST) um die Rotationsachse (R) drehbar ist,
- eine Mehrzahl äußere Werkzeugnuten (WNA), welche an einer radialen Außenseite des Werkzeugkörpers (WK) angeordnet und jeweils ausgestaltet sind, eine zweite Spulenseite (SS21) einer Spule (S1) aufzunehmen, wobei die zweite Spulenseite (SS21) im Bereich eines Nutgrunds der äußeren Werkzeugnut (WNA) anordenbar ist,
- eine Mehrzahl erste Werkzeugteile (WT1), welche in den äußeren Werkzeugnuten (WNA) jeweils im Bereich des Nutgrunds radial unterhalb einer zweiten Spulenseite (SS21) bewegbar angeordnet sind,
wobei
- der Werkzeugkörper (WK) ausgestaltet ist, nach Einbringen der ersten Spulenseiten (SS1) in einer bezüglich der Rotationsachse (R) ersten Position relativ zu dem Stator (ST) eine Drehung zu einer zweiten Position relativ zu dem Stator (ST) auszuführen, um die erste und zweite Spulenseiten (SS1, SS2) jeweils verbindende Spulenköpfe (SK) der Spulen (S) zu formen, und
- die ersten Werkzeugteile (WT1) jeweils ausgestaltet sind, mittels einer zweiten Bewegung in radialer Richtung (RR) die zweite Spulenseite (SS21) in eine zweite Statornut (STNn) einzubringen,
**dadurch gekennzeichnet, dass**
- die Mehrzahl äußere Werkzeugnuten (WNA) jeweils ausgestaltet sind, eine erste Spulenseite (SS11) der Spule (S1) aufzunehmen, wobei die erste Spulenseite (SS11) im Bereich einer Nutöffnung der äußeren Werkzeugnut (WNA) anordenbar sind,
wobei
- die ersten Werkzeugteile (WT1) jeweils ausgestaltet sind, mittels einer ersten Bewegung in radialer Richtung (RR) die erste Spulenseite (SS11) in eine erste Statornut (STN1) einzubringen,
wobei das Werkzeug (W) ferner aufweist:
- eine Mehrzahl innere Werkzeugnuten (WNI), welche radial unterhalb der äußeren Werkzeugnuten (WNA) in dem Werkzeugkörper (WK) angeordnet sind, und
- eine Mehrzahl zweite Werkzeugteile (WT2), welche in den inneren Werkzeugnuten (WNI) jeweils bewegbar angeordnet sind, wobei die ersten und zweiten Werkzeugteile (WT1, WT2) jeweils ausgestaltet sind, mittels einer ersten und einer zweiten Bewegung des zweiten Werkzeugteils (WT2), insbesondere in axialer Richtung (AR), die erste und die zweite Bewegung des ersten Werkzeugteils (WT1) in der äußeren Werkzeugnut (WNA) in radialer Richtung (RR) zu bewirken, wobei die zweiten Werkzeugteile (WT2) insbesondere von zumindest einer Stirnseite des Werkzeugkörpers (WK) aus bewegbar sind,
- wobei
die ersten Werkzeugteile (WT1) jeweils zumindest eine Finne (FI) und die zweiten Werkzeugteile (WT2) jeweils zumindest einen Einschnitt (ES) aufweisen, wobei die Finne (FI) und der Einschnitt (ES) ausgestaltet sind, dass eine Bewegung des zweiten Werkzeugteils (WT2) in axialer Richtung (AR) die Bewegung des ersten Werkzeugteils (WT1) in radialer Richtung (RR) bewirkt.

2. Werkzeug (W) nach Patentanspruch 1, wobei
in dem Werkzeugkörper (WK) zwischen einer äußeren Werkzeugnut (WNA) und einer inneren Werkzeugnut (WNI) ein Steg angeordnet ist, wobei der Steg zumindest eine Öffnung (OE) aufweist, welche die äußere Werkzeugnut (WNA) mit der inneren Werkzeugnut (WNI) räumlich verbindet, und
die zumindest eine Finne (FI) des ersten Werkzeugteils (WT1) ausgestaltet ist, durch die Öffnung (OE) hindurch in die innere Werkzeugnut (WNI) zu ragen.

3. Verwendung eines Werkzeugs (W) nach einem der Patentansprüche 1 bis 2 zum Einbringen und Formen von Spulen (S) in einen Stator (ST) einer elektrischen rotierenden Maschine.

## Claims

1. Tool (W) for introducing coils (S) into a stator (ST) of an electric rotating machine and for shaping coils (S), wherein the stator (ST) has a stator core (STK), the cylindrical stator interior (STI) of which serves as a receptacle of a rotor of the machine which is rotatable about an axis of rotation (R) and on the radial inner side of which stator slots (STN) are embodied for receiving first and second coil sides (SS1, SS2) of a number of coils (S), and wherein the tool (W) has at least:
- a cylindrical tool body (WK), which can be arranged in the stator interior (STI) and is rotatable relative to the stator (ST) about the axis of rotation (R),
- a number of outer tool slots (WNA), which are arranged on a radial outer side of the tool body (WK) and are configured in each case to receive a second coil side (SS21) of a coil (S1), wherein the second coil side (SS21) can be arranged in the region of a slot bottom of the outer tool slot (WNA),
- a number of first tool parts (WT1), which are moveably arranged in the outer tool slots (WNA) in each case in the region of the slot bottom radially beneath a second coil side (SS21),
wherein
- the tool body (WK) is configured, after introducing the first coil sides (SS1) in a first position relative to the stator (ST) with respect to the axis of rotation (R), to perform a rotation to a second position relative to the stator (ST), to shape the coil heads (SK) of the coils (S) connecting the respective first and second coil sides (SS1, SS2), and
- the first tool parts (WT1) are configured in each case to introduce the second coil side (SS21) into a second stator slot (STNn) by means of a second movement in the radial direction (RR),
**characterised in that**
- the number of outer tool slots (WNA) are configured in each case to receive a first coil side (SS11) of the coil (S1), wherein the first coil side (SS11) can be arranged in the region of a slot opening of the outer tool slot (WNA), wherein
- the first tool parts (WT1) are configured in each case to introduce the first coil side (SS11) into a first stator slot (STN1) by means of a first movement in the radial direction (RR),
wherein the tool (W) further has:
- a number of inner tool slots (WNI), which are arranged radially beneath the outer tool slots (WNA) in the tool body (WK), and
- a number of second tool parts (WT2), which are moveably arranged in each case in the inner tool slots (WNI), wherein the first and second tool parts (WT1, WT2) are each configured to prompt the first and second movement of the first tool part (WT1) in the outer tool slot (WNA) in the radial direction (RR), by means of a first and second movement of the second tool part (WT2), in particular in the axial direction (AR), wherein the second tool parts (WT2) can be moved out from at least one front side of the tool body (WK),
- wherein
the first tool parts (WT1) have at least one fin (FI) in each case and the second tool parts (WT2) have at least one recess (ES) in each case, wherein the fin (FI) and the recess (ES) are embodied such that a movement of the second tool part (WT2) in the axial direction (AR) prompts the movement of the first tool part (WT1) in the radial direction (RR).

2. Tool (W) according to claim 1, wherein
a web is arranged in the tool body (WK) between an outer tool slot (WNA) and an inner tool slot (WNI), wherein the web has at least one opening (OE), which spatially connects the outer tool slot (WNA) to the inner tool slot (WNI), and the at least one fin (FI) of the first tool part (WT1) is configured to protrude through the opening (OE) into the inner tool slot (WNI).

3. Use of a tool (W) according to one of claims 1 to 2 for introducing coils (S) into a stator (ST) of an electric rotating machine and for shaping coils.

## Revendications

1. Outil (W) d'introduction et de mise en forme de bobines (S) dans un stator (ST) d'une machine électrique tournante, dans lequel le stator (ST) a un noyau (STK) statorique, dont l'espace (STI) intérieur cylindrique de stator sert à loger un rotor, tournant autour d'un axe (R) de rotation, de la machine et sur sa face intérieure radiale sont constituées des cannelures (STN) statoriques de réception de premier et deuxième côtés (SS1, SS2) d'une pluralité de bobines (S), et dans lequel l'outil (W) a au moins :
- un corps (WK) cylindrique d'outil, qui peut être disposé dans l'espace (STI) intérieur du stator et qui peut tourner par rapport au stator (ST) autour de l'axe (R) de rotation,
- une pluralité de cannelures (WNA) extérieures d'outil, qui sont disposées sur une face extérieure radiale du corps (WK) de l'outil et qui sont chacune conformées pour recevoir un deuxième côté (SS21) d'une bobine (S1), dans lequel le deuxième côté (SS21) d'une bobine peut être mis dans la partie d'un fond de la cannelure (WNA) extérieure de l'outil,
- une pluralité de premières parties (WT1) d'outil, qui sont montées mobiles dans les cannelures (WNA) extérieures de l'outil, respectivement dans la partie du fond de cannelure en dessous radialement d'un deuxième côté (SS21) de la bobine,
dans lequel
- le corps (WK) de l'outil est conformé pour, après introduction des premiers côtés (SS1) de bobine dans une première position rapportée à l'axe (R) de rotation par rapport au stator (ST), effectuer une rotation à une deuxième position par rapport au stator (ST) afin de conformer des têtes (SK) des bobines (S) reliant chacune des premier et deuxième côtés (SS1, SS2) de bobine, et
- les premières parties (WT1) de l'outil sont conformées chacune pour, au moyen d'un deuxième déplacement dans la direction (RR) radiale, introduire le deuxième côté (SS21) de bobine dans une deuxième cannelure (STNn) du stator,
**caractérisé en ce que**
- la pluralité de cannelures (WNA) extérieures de l'outil sont conformées chacune pour recevoir un premier côté (SS11) des bobines (S1), dans lequel les premiers côtés (SS11) de bobine peuvent être disposés dans la partie d'une ouverture de la cannelure (WNA) extérieure de l'outil,
dans lequel
- des premières parties (WT1) de l'outil sont conformées chacune pour, au moyen d'un premier déplacement dans la direction (RR) radiale, introduire le premier côté (SS11) de bobine dans une première cannelure (STN1) du stator,
dans lequel l'outil (W) a en outre :
- une pluralité de cannelures (WNI) intérieures d'outil, qui sont disposées en dessous radialement des cannelures (WNA) extérieures d'outil dans le corps (WK) de l'outil, et
- une pluralité de deuxièmes parties (WT2) d'outil, qui sont montées chacune mobiles dans les cannelures (WNI) intérieures d'outil, dans lequel les premières et les deuxièmes parties (WT1, WT2) d'outil sont conformées chacune pour, au moyen d'un premier et d'un deuxième déplacement de la deuxième partie (WT2) de l'outil, en particulier dans la direction (AR) axiale, provoquer le premier et le deuxième déplacements de la première partie (WT1) d'outil dans la cannelure (WNA) extérieure de l'outil dans la direction (RR) radiale, dans lequel les deuxièmes parties (WT2) de l'outil sont mobiles, en particulier à partir d'au moins un côté frontal du corps (WK) de l'outil,
- dans lequel
les premières parties (WT1) de l'outil ont chacune au moins une aile (FI) et les deuxièmes parties (WT2) de l'outil ont chacune au moins une encoche (ES), dans lequel l'aile (FI) et l'encoche (ES) sont conformées, de manière à ce qu'un déplacement de la deuxième partie (WT2) d'outil dans la direction (AR) axiale provoque le déplacement de la première partie (WT1) de l'outil dans la direction (RR) radiale.

2. Outil (W) suivant la revendication 1, dans lequel
il est monté dans le corps (WK) de l'outil entre une cannelure (WNA) extérieure de l'outil et une cannelure (WNI) intérieure de l'outil, une entretoise, dans lequel l'entretoise a au moins une ouverture (OE), qui relie spatialement la cannelure (WNA) extérieure de l'outil à la cannelure (WNI) intérieure de l'outil, et
la au moins une aile (FI) de la première partie (WT1) de l'outil est conformée pour, en passant par l'ouverture (OE), pénétrer dans la cannelure (WNI) intérieure de l'outil.

3. Utilisation d'un outil (W) suivant l'une des revendications 1 à 2 pour l'introduction et la mise en forme de bobines (S) dans un stator (ST) d'une machine électrique tournante.
